# EUROPEAN PATENT APPLICATION

(11) **EP 2 186 855 A1**
(43) Date of publication of application: **19.05.2010**
(21) Application number: 08169109.9
(22) Date of filing: 14.11.2008
(51) Int. Cl.: C08L 23/00

(54) **A polyolefin composition for the production of an article having a controlled degradation, an article comprising said composition and a process for the production of said article.**

(71) Applicant: Total Petrochemicals Research Feluy, 7181 Seneffe (Feluy) (BE)
(72) Inventor: Vendrell, Gloria, B - 1150, Bruxelles (BE); Haubruge, Hugues, B-1457, Walhain (BE); Saudemont, Thierry, B-1170, Bruxelles (BE)

(57) **Abstract**

The present invention discloses a polyolefin composition for the production of an article having a controlled degradation and/or disintegration, comprising :
(A) at least one polyolefin component which comprises at least one polyolefin combined with at least one prodegradation/prodisintegration agent, and
(B) at least another polyolefin component which comprises at least one polyolefin,
constituent (B) being intended to form a part in the article, which degrades more slowly than the part formed by constituent (A) and which covers at least partially the latter.

## Description

### Field of the invention

The present invention relates to a polyolefin composition for the production of an article having a controlled degradation and/or disintegration ; to degradable bi- and multi-component polyolefin articles comprising at least a first component with a first polyolefin and a first prodegradation agent and a second component with a second polyolefin and an optional second prodegradation agent, in particular, to bi- and multi-component fibers and films ; and to a process for the production of said articles.

### Background of the invention

Due to their good physical and chemical properties polyolefins are widely used for the manufacture of articles like packaging films or fibers and nonwovens in disposable hygiene articles like diapers. Especially for disposable articles polyolefins create disposal problems as they do not degrade or do so only very slowly under standard conditions in waste disposal or composting sites.

It has therefore been proposed to make disposable articles from biodegradable polymers, for example poly(lactic) acid (PLA). Fibers made from poly(lactic) acid have for example been disclosed in US 5,760,144. However, a problem encountered with such fibers is the lack of control of the onset of degradation. Additionally, poly(lactic) acid is difficult to process as it is hydrolytically very unstable and needs to be dried if moisture levels exceed 250 ppm. Processing of poly(lactic) acid is difficult due to high melt viscosity, which in consequence leads to reduced throughput on the transformation equipment.

US 6,441,267 discloses fibers and films made from a biodegradable polymer like poly(lactic) acid encapsulated in a non-biodegradable polymer like a polyolefin. This has allowed an improvement in the control of the onset of degradation but did not solve the processing issues related to poly(lactic) acid and other biodegradable polymers.

WO 2004/094516 discloses an additive comprising a metal salt of a fatty acid, which allows the preparation of degradable thermoplastic polymers, like polypropylene, polyethylene or blends thereof. It is proposed to control the degradation rate of a blend of polypropylene and polyethylene by increasing the fraction of polyethylene, thereby decreasing the degradation rate. This approach does not offer any control over the onset of degradation.

Previous studies by the inventors of the present invention have shown that the incorporation of additives as disclosed in WO 2004/094516 into polypropylene even at concentrations as low as 0.5 % by weight will lead to a rate of degradation that is too high for practical uses, and additionally to an early onset of degradation.

It is therefore an object of the present invention to provide articles with controllable onset and rate of degradation.

It is another object of the present invention to provide such articles that are easily produced using existing processing equipment.

### Summary of the invention

Accordingly the present invention provides a polyolefin composition for the production of an article having a controlled degradation and/or disintegration, comprising :
(A) at least one polyolefin component which comprises at least one polyolefin combined with at least one prodegradation/prodisintegration agent,
   characterized in that it further comprises :
(B) at least another polyolefin component which comprises at least one polyolefin,
constituent (B) being intended to form a part in the article, which degrades more slowly than the part formed by constituent (A) and which covers at least partially the latter.

In addition the present invention provides a bi- or multi-component polyolefin article, such as a fiber, a filament, a yarn, a tape, a film, a sheet, comprising the above-mentioned composition, wherein part (B) at least partially covers part (A).

The present invention provides also a process for the production of said bi- or multi-component polyolefin article, comprising the steps of :
- supplying constituent (A) as defined above and constituent (B) as defined above, each to an extruder, and
- melt-extruding said constituents in parallel into said article in such a way that constituent (B) at least covers constituent (A).

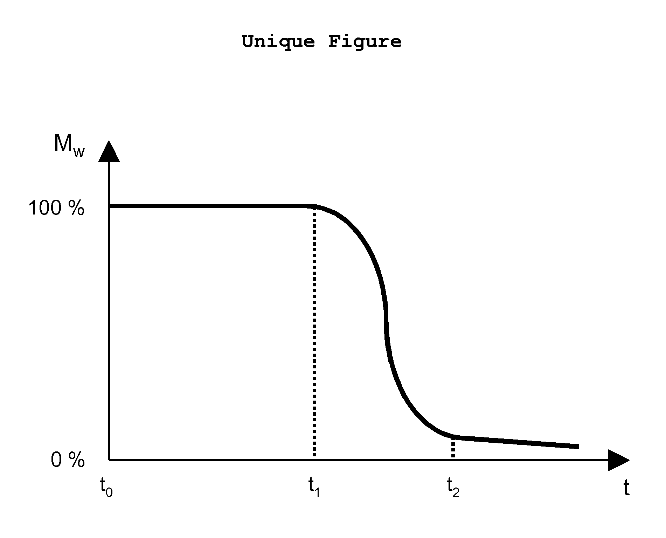

### Description of the Unique Figure

Unique Figure shows a schematic representation of the evolution of the molecular weight during the lifecycle of a degradable polymer article.

The lifecycle of degradable polymer articles is schematically shown in the unique Figure using the evolution of molecular weight M_{w} in dependence of time t as example. It is clear that the curve also applies in the same or very similar form to other properties of the degradable article, such as mechanical properties, for example elongation. The lifecycle of degradable polymer articles comprises three major phases:
a) Storage and use
   During this phase, which goes from to to t₁, the properties of the polymer articles remain essentially the same. This period can last from about two weeks to about 2 years in the case of disposable polymer articles.
b) Disintegration
   During this phase, which goes from t₁ to t₂, the structural integrity of the polymer article is lost, and the polymers are broken down chemically into smaller segments so that they are available for biodegradation in phase c). The disintegration step normally takes place over a few weeks.
   Time t₁ can be referred to as onset of disintegration. It can be defined as the time when the properties of the degradable polymer article, e.g. molecular weight M_{w} or elongation, start to deteriorate at a rate that is significantly higher than during phase a).
c) Biodegradation
   The residues of the polymer articles remaining after phase b) are further broken down by living organisms. In general this step takes place over a period of up to 6 months.

The requirements that packaging needs to meet so as to be considered recoverable through composting and biodegradation are described in European standard EN 13432:2000.

For the purpose of the present invention time t₀ is defined as the time when the degradable polymer article comes off the production line, e.g. when a film or fiber comes off the respective production line.

For the purpose of the present invention time t₁ is defined as the time when the respective property of the degradable polymer article have dropped to 80 % of their original value.

### Detailed description of the invention

### Constituent (A)

Constituent (A) is at least one polyolefin component, which comprises at least one polyolefin combined with at least one prodegradation/prodisintegration agent.

### The polyolefin

The polyolefin can be selected from the group consisting of the homopolymers of ethylene, the homopolymers of α-olefin and the copolymers of ethylene and/or at least one α-olefin and/or at least one polymerizable comonomer.

Preferably, the olefin is selected from the group consisting of ethylene and propylene. More preferably, the polyolefin is polyethylene or polypropylene.

The polyolefins may also comprise additives such as antioxidants, acid scavengers, antistatic agents, processing aids, colorants, nucleating agents etc.. The polyolefins may be produced by any process and using any catalyst suitable for polymerizing ethylene and α-olefins.

### The prodegradation/prodisintegration agent

The prodegradation/prodisintegration agent can comprise a metal salt of a fatty acid, particularly a transition metal salt of a fatty acid. Preferably, said fatty acid is stearic acid. Said transition metal is a transition metal from groups 3 to 12 of the periodic table of the elements. Said transition metal is preferably selected from the group consisting of cerium, manganese, iron, cobalt, nickel and mixtures of said metals. Thus, the most preferred prodegradation agent comprises a compound selected from a group consisting of cerium stearate, manganese stearate, iron stearate, cobalt stearate, nickel stearate and mixtures of said compounds.

The prodegradation agent or a mixture of two or more prodegradation agents is added in such an amount that the polyolefin comprises at least 0.01 % by weight, preferably in at least 0.02 % by weight, more preferably in at least 0.05 % by weight, even more preferably in at least 0.1 % by weight, even more preferably in at least 0.2 % by weight, and most preferably at least 0.5 % by weight of one or more transition metal salts of fatty acids as defined in the previous paragraph. The prodegradation agent is added in such an amount that the polyolefin comprises no more than 10 % by weight, preferably no more than 5 % by weight, even more preferably no more than 2 % by weight, and most preferably no more than 1 % by weight of one or more transition metal salts of fatty acids as defined in the previous paragraph. The prodegradation agent can be added in form of an additive to the polyolefin. The dispersion of the prodegradation agent can be improved by a dispersion aid.

Whilst not wishing to be bound by theory, it is believed that prodegradation agents accelerate the autoxidation of polymers, particularly by accelerating the decomposition of the hydroperoxides, which are formed in the autoxidation process, to alkoxy and hydroxyl radicals (for a description of the autoxidation process see Plastics Additives Handbook, Edited by H. Zweifel, 5th edition, Hanser Publishers, 2001, pages 4 - 9). Once the antioxidants, which have been added to the polymer for protection against autoxidation, have been depleted and triggers, such as ultraviolet radiation or heat, are present, the prodegradation agents act as oxidation catalysts in the described way and start the disintegration phase. In the disintegration phase, carbonyl moieties are introduced into the polymer chains so that they can eventually be bioassimilated by living organisms.

### Constituent (B)

Constituent (B) is at least another polyolefin component, which comprises at least one polyolefin.

Consequently, for a more detailed description of the polyolefin, it can be referred to the above paragraph entitled " The polyolefin" concerning the constituent (A).

Constituent (B) is advantageously selected so that the time of degradation and/or disintegration that it takes for the molecular weight or the elongation of the part formed by constituent (A) to reach a value of 50% of its original value is at most 90% of the respective time of degradation/disintegration of the part formed by constituent (B).

Furthermore, constituent (B) can comprise at least one prodegradation/prodisintegration agent.

The prodegradation/prodisintegration agent is as described for Constituent (A). Consequently, for a more detailed description of the prodegradation/prodisintegration agent, it can be referred to the above paragraph entitled "The prodegradation/prodisintegration agent" concerning the constituent (A).

### Particular embodiments of the composition of the present invention

According to a first embodiment, the polymer component of constituent (A) is polypropylene, and constituent (B) comprises or consists of polyethylene with at least one prodegradation/prodisintegration agent.

According to a second embodiment, constituent (B) consists of the same or substantially the same polyolefin component as constituent (A) without a prodegradation/prodisintegration agent or with the same or substantially the same prodegradation/prodisintegration agent(s) of constituent (B) but introduced in a lower content. The preferred polyolefin component of constituents (A) and (B) is polyethylene.

### The bi- or multi-component polyolefin article of the present invention and process for its production

The term "bi- or multi-component" denotes an article having at least two essentially continuous polymer phases, for example having two, three, four, five, six or seven essentially continuous polymer phases. In the following the term "bi- or multi-component" is meant to include all of these possibilities. Examples for bi- or multi-component articles are bi- or multi-component fibers, filaments, yarns or tapes and bi- or multi-layer films or sheets. In the following the term "fiber" is used to denote fibers, filaments, yarns and tapes.

Bi- or multi-component fibers are known in many different configurations, for example as side-by-side, sheath-core, islands-in-the-sea, pie or stripe bi-component fibers. Bi- or multi-component fibers can be formed by co-extrusion of at least two different components into one fiber. This is done by feeding the different components to a corresponding number of extruders and combining the different melts into a single fiber. The resulting fiber has at least two different essentially continuous polymer phases. All of these fibers as well as their manufacture are well-known in the art and described for example in F. Fourné, Synthetische Fasern, Carl Hanser Verlag, 1995, chapter 5.2 or in B.C. Goswami et al., Textile Yarns, John Wiley & Sons, 1977, p. 371 - 376.

Bi- or multi-component tapes can be produced either by co-extrusion of the tape in the same way as bi- or multi-component fibers are produced or they can be produced by slitting a bi- or multi-layer film in machine direction.

The bi- or multi-layer films or sheets have at least two layers. They can also have three, four, five, six or seven layers. Bi- or multi-layer films or sheets can be produced for example by co-extrusion of the at least two polymers or by extrusion-coating, wherein an additional polymer layer is applied to a film. The bi- or multi-component films can be cast film, blown film, mono- or bi- oriented polyolefin film. The bi- or multi-component sheets can be produced by extruding the molten polymer through a slitted die onto cooling rolls. By way of example, a three-layer film has a core layer made from a first component and exterior layers made from a second component, said exterior layers being on opposite sides of the core layer.

It has now surprisingly been found that the onset and rate of degradation can be controlled by providing a bi- or multi-component polyolefin article wherein a first component comprising a first polyolefin and a first prodegradation agent is at least partially covered or completely covered by a second component comprising a second polyolefin and an optional second prodegradation agent, provided that said first and second components differ at least by either one of type of polyolefin, type of prodegradation agent or level of prodegradation agent.

The term "at least partially covered" is understood to mean that at least 50 % of the surface of said first component is covered by said second component. The term "completely covered" is understood to mean that at least 95 %, preferably at least 98 % and most preferably at least 99 % of the surface of said first component is covered by said second component.

The first component of the bi- or multi-component article is characterized by a higher rate of degradation than the second component. The rate of degradation can be determined by measuring one or more of the following parameters:
- Mechanical properties: During the degradation process the mechanical properties are drastically decreased. This can be seen for example in the decay of elongation at break.
- Molecular weight: As the polymer chains are broken down the average molecular weight is reduced.
- Carbonyl index: The carbonyl index is a measure of the concentration of oxygen incorporated into the polymer chains and thus increases with the degradation of the polymer.

Degradation of the bi- or multi-component articles was simulated in the laboratory by ageing them in an aerated oven at a temperature of 60°C. On average a sample is taken from the oven every 50 hours and used in the determination of one or several of the parameters mentioned above.

Depending upon the rate of degradation other temperatures can be used as well, i.e. if the rate of degradation is low a temperature of 70°C is used, or if the rate of degradation is high a temperature of 50°C is used to obtain sufficient time-resolution of the results. Results from oven ageing of identical bi- or multi-component articles at various temperatures, e.g. 50°C, 60°C and 70°C, also allow the calculation of the activation energy and consecutive extrapolation of degradation time at temperatures other than the experimentally tested ones.

Alternatively, degradation was simulated by ageing samples of the bi- or multi-component articles in a Weather-O-Meter (WOM) test according to EN ISO 4892-2:1999. On average a sample is taken every 50 hours and used in the determination of one or several of the parameters mentioned above.

The mechanical properties of the bi- or multi-component articles are measured according to the respective ISO procedures. For example, elongation and tenacity are measured according to ISO 2062:1993. If need be, the physical form of the samples can deviate from the specifications of the norm. For example the tests can be conducted using film samples or fiber samples.

The molecular weight is measured using gel permeation chromatography (GPC). The samples are dissolved in 1,2,4-trichlorobenzene. The resulting solution is injected into a gel permeation chromatograph and analyzed under conditions well-known in the polymer industry.

The carbonyl index is measured by infrared spectroscopy (IR), for example by transmission or by attenuated total reflectance (ATR). In general, films are analyzed by transmission and fibers are analyzed by ATR. In the case of transmission IR the carbonyl index is based upon the integration of the peaks in the region of the IR spectrum generally associated with carbonyl groups, i.e. in the range from about 1900 cm⁻¹ to about 1600 cm⁻¹. In the case of ATR the carbonyl index is the ratio between the intensity of a peak not affected by the degradation, for example a peak associated with the methyl groups of the polypropylene chains, and the combined intensities of the peaks in the region of the IR spectrum generally associated with carbonyl groups, i.e. in the range from about 1900 cm⁻¹ to about 1600 cm⁻¹.

For practical purposes the rate of degradation can be defined as the time of ageing (t₅₀) in an aerated oven or in a Weather-O-Meter that it takes for a property, for example molecular weight or a mechanical property such as elongation or tenacity, to reach a value of 50 % of its original value.

The results for t₅₀ from the ageing test can be reported in different ways depending upon the initial time of reference. The results can be reported taking time t₀, as explained before and shown in unique Figure, as reference time; thus t₅₀ includes the phases of storage and use as well as part of the disintegration phase. Alternatively, the results can be reported taking time t₁, which is the time of onset of degradation as reference. As t₁ might be very difficult to determine from the experimental values, we have defined it as the time when the property of the article reaches a value of 80 % of the original value. Taking t₁ as reference time one obtains values for the time of disintegration (t₅₀') for the two components.

For the first component of the bi- or multi-component article the time of ageing (t₅₀) or the disintegration time (t₅₀') that it takes for a property to reach a value of 50 % of its original value is at most 90 % of the respective time of ageing (t₅₀) or the disintegration time (t₅₀') or both of the second component. Preferably, it is at most 80 %. More preferably, it is at most 70 %. Most preferably, it is at most 50 %. While no restriction regarding the lower limit of said time of ageing (t₅₀) or the disintegration time (t₅₀') or both exists for the invention to work, it is preferred that for the first component of the bi- or multi-component article the time of ageing (t₅₀) or the disintegration time (t₅₀') or both that it takes for the elongation at break to reach a value of 50 % or less of its original value is at least 5 % of the respective time of ageing (t₅₀) or the disintegration time (t₅₀') or both of the second component. More preferably, it is at least 10 %. Most preferably, it is at least 20 %.

The higher rate of degradation can be achieved either by using different polyolefins, e.g. by using polypropylene instead of polyethylene, or by increasing the amount of prodegradation agent added to the respective component. The first component can for example comprise a polypropylene and a first prodegradation agent and the second component can for example comprise a polyethylene and a second prodegradation agent, with the first and second prodegradation agent being present in essentially the same amount by weight%, or the first component can for example comprise a polypropylene and a prodegradation agent and the second component can for example comprise a polypropylene and either no prodegradation agent at all or a second prodegradation agent present in an amount lower than the first prodegradation agent.

The bi- or multi-component articles of the present invention can be produced on any processing equipment that is adapted for the conversion of polyolefins. Thus, the known difficulties in processing biodegradable polymers like poly(lactic) acid can be avoided.

The bi- or multi-component article of the present invention can be a fiber. In particular, it can be a fiber wherein the at least two components are in a sheath-core configuration or in an islands-in-the-sea configuration. Bi- or multi-component fibers of the present invention can be used in the production of nonwoven or woven fabrics.

The bi- or multi-component article of the present invention can be a nonwoven or woven fabric essentially consisting of bi- or multi-component fibers as described above. Such nonwoven or woven fabrics can be used in agriculture, disposable hygiene articles like diapers, wipes and the likes. The bi- or multi-component tapes can be used for nonwoven or woven fabrics, which can be used for example in carpet backing and bags.

The bi- or multi-component article of the present invention can be a film. The preferred bi- or multi-component films are films and sheets with at least three layers. An example is a three-layer film or sheet with an interior layer and exterior layers. For example said interior layer is made of a first component, which comprises a first polyolefin and a first prodegradation agent, and said exterior layers are made of a second component, which comprises a second polyolefin. Optionally said second component comprises a first prodegradation agent. Alternatively, said exterior layers may be made of different compositions, e.g. one of said exterior layers can be a heat-seal polyolefin and the other of said exterior layers not. Optionally the composition used in said exterior layers comprises a second prodegradation agent. Said first and second prodegradation agents may be the same or different. Additional layers to impart specific properties like barrier properties can also be included, thus resulting in films with four, five, six or even seven layers.

The bi- or multi-component films and sheets can be used for example in packaging, agricultural or thermoforming applications.

### Examples

The invention is illustrated by the comparison of the degradation of a polypropylene and a polyethylene, both additivated with a prodegradant.

The polypropylene is a Ziegler-Natta CR homopolymer with a very narrow molecular weight distribution and has a melt flow of 25 dg/min (measured according to ISO 1133, condition L, at 230°C under 2.16 kg) and a standard anti-gas fading antioxidant package.

The polyethylene is a metallocene polyethylene with hexene as comonomer. It has a density of 0.934 g/cm³ and a melt index of 8 dg/min (measured according to ISO 1133, condition D, at 190°C under 2.16 kg).

The prodegradadant was used in form of a masterbatch comprising equal amounts by weight of iron stearate and manganese stearate with the total concentration of stearate in the masterbatch being 10 % by weight. The melt flow of the masterbatch was 11.3 dg/min (measured according to ISO 1133, condition L, at 230°C under 2.16 kg).

The prodegradant masterbatch (MB) to the polypropylene resp. the polyethylene in an amount of 1 % by weight. The blends of the masterbatch with the polypropylene resp. polyethylene were extruded at a temperature of 210°C on a single screw extruder before further processing.

The blends of polypropylene and prodegradant masterbatch resp. polyethylene and prodegradant masterbatch were spun into fibers on a PLASTICISERS Lab Line 12A fiber spinning line, equipped with 22 mm extruder screw having an L/D ratio of 21 and a rectangular die having 120 holes of a diameter of 0.5 mm. Melt temperature was kept at 240°C. Take-up speed was 200 m/min.

Fiber titers were measured on a Zweigle vibroscope S151/2 in accordance with norm ISO 1973:1995.

Ageing of the fibers was done in an oven at a temperature of 60°C. Samples for analyses were taken at 0, 50, 100, 150, 250, 400, 600 and 1000 hours.

Fiber tenacity and elongation were measured on a Lenzing Vibrodyn according to norm ISO 5079:1995 with a testing speed of 10 mm/min.

The molecular weight of the samples is measured using gel permeation chromatography (GPC). The samples are dissolved in 1,2,4-trichlorobenzene. The resulting solution is injected into a gel permeation chromatograph and analyzed under conditions well-known in the polymer industry.

The results of the comparative degradation tests on fibers are shown in table 1. Fiber tenacity, elongation and the molecular weight are reported in percent relating to the value at to. Thus, the value at to corresponds to 100 %.

Table 2 gives the times t₅₀ that it takes for the polymer properties to reach a value of 50 % of their original values at to. t₅₀ has been determined for each property from the equation of the straight line defined by the closest experimental data point below 50 % and the closest experimental data point above 50 %.

**Table 1**

| | Unit | Ex. 1 | Ex. 2 |
|---|---|---|---|
| Polymer | | PP | PE |
| Prodegradant | wt% | 1.0 | 1.0 |
| Fiber titer | dtex | 3.8 | 4.1 |
| Fiber tenacity at t = | | | |
| 0 hours | % | 100 | 100 |
| 50 hours | % | 89 | 96 |
| 100 hours | % | 77 | 99 |
| 150 hours | % | 45 | 96 |
| 250 hours | % | 7 | 90 |
| 400 hours | % | n/a | 71 |
| 600 hours | % | n/a | 30 |
| Fiber elongation at t = | | | |
| 0 hours | % | 100 | 100 |
| 50 hours | % | 98 | 138 |
| 100 hours | % | 84 | 136 |
| 150 hours | % | 41 | 125 |
| 250 hours | % | 3 | 127 |
| 400 hours | % | n/a | 97 |
| 600 hours | % | n/a | 16 |
| Molecular weight M_{w} | | | |
| 0 hours | % | 100 | 100 |
| 250 hours | % | 99 | 99 |
| 400 hours | % | 24 | 79 |
| 600 hours | % | 23 | 57 |
| 1000 hours | % | 2 | 30 |

**Table 2**

| | Unit | Ex. 1 | Ex. 2 |
|---|---|---|---|
| t₅₀ from fiber tenacity | h | 142 | 502 |
| t₅₀ from fiber elongation | h | 132 | 502 |
| t₅₀ from molecular weight M_{w} | h | 348 | 704 |

Alternatively, one can compare the time of disintegration (t₅₀') that it takes to reach a value of 50 % of the original properties. In this case time t₁ as defined previously is taken as starting point. Time t₁ can be determined from the experimental data as given in Table 1 by linear extrapolation between the closest experimental data point below 80 % and the closest experimental data point above 80 % of the original properties. Thus, the time t₅₀' to reach a value of 50 % of the original properties is calculated by subtracting t₁ from t₅₀ as given in Table 2. The results for t₁ and t₅₀' based on the measured polymer properties are given in Table 3.

**Table 3**

| | Unit | Ex. 1 | Ex. 2 |
|---|---|---|---|
| Fiber tenacity | | | |
| t₁ | h | 88 | 329 |
| t₅₀' | h | 55 | 173 |
| Fiber elongation | | | |
| t₁ | h | 105 | 442 |
| t₅₀' | h | 28 | 60 |
| Molecular weight M_{w} | | | |
| t₁ | h | 288 | 393 |
| t₅₀' | h | 60 | 311 |

The results clearly show that the time of degradation and/or disintegration for example 1 is significantly lower than for Example 2. Thus, a bi-component article, for example a sheath-core fiber with Example 1 as core and Example 2 as sheath, will give a fiber with good storage and use properties in combination with good biodegradation properties.

## Claims

1. A polyolefin composition for the production of an article having a controlled degradation and/or disintegration, comprising :
(A) at least one polyolefin component which comprises at least one polyolefin combined with at least one prodegradation/prodisintegration agent,
**characterized in that** it further comprises :
(B) at least another polyolefin component which comprises at least one polyolefin,
constituent (B) being intended to form a part in the article, which degrades more slowly than the part formed by constituent (A) and which covers at least partially the latter.

2. The polyolefin composition according to Claim 1, wherein constituent (B) is selected so that the time of degradation and/or disintegration that it takes for the molecular weight or the elongation of the part formed by constituent (A) to reach a value of 50% of its original value is at most 90% of the respective time of degradation/disintegration of the part formed by constituent (B).

3. The composition according to Claim 1 or Claim 2, wherein constituent (B) comprises at least one prodegradation/prodisintegration agent.

4. The composition according to anyone of Claims 1 to 3, wherein the polyolefins for constituents (A) and (B) are selected from the group consisting of the homopolymers of ethylene, the homopolymers of α-olefin and the copolymers of ethylene and/or at least one α-olefin and/or at least one polymerizable comonomer.

5. The composition according to Claim 4, wherein the olefins are selected from the group consisting of ethylene and propylene.

6. The composition according to anyone of Claims 1 to 5, wherein a prodegradation/prodisintegration agent for constituent (A) and possible for constituent (B) comprises a metal salt of a fatty acid.

7. The composition according to Claim 6, wherein the metal is selected from the group consisting of cerium, manganese, iron, cobalt, nickel and mixtures of said metals.

8. The composition according to Claim 6 or Claim 7, wherein the fatty acid is stearic acid.

9. The composition according to anyone of Claims 1 to 8, wherein the polymer component of constituent (A) is polypropylene, **characterized by** the fact that constituent (B) comprises or consists of polyethylene with at least one prodegradation/prodisintegration agent.

10. The composition according to anyone of Claims 1 to 8, **characterized by** the fact that constituent (B) consists of the same or substantially the same polyolefin component as constituent (A) without a prodegradation/prodisintegration agent or with the same or substantially the same prodegradation/prodisintegration agent(s) of constituent (B) but introduced in a lower content.

11. The composition according to Claim 10, wherein the polyolefin component of constituents (A) and (B) is polyethylene.

12. A bi- or multi-component polyolefin article, such as a fiber, a filament, a yarn, a tape, a film, a sheet, comprising the composition of anyone of Claims 1 to 11, wherein part (B) at least partially covers part (A).

13. The article according to Claim 12, which is a two-component fiber, the two components being in a sheath-core or islands-in-the-sea configuration.

14. A nonwoven or woven fabric essentially consisting of the bi- or multi-component fiber of anyone of Claims 12 to 13.

15. A process for the production of a bi- or multi-component polyolefin article of anyone of Claims 12 to 13, comprising the steps of:
- supplying constituent (A) as defined in anyone of Claims 1 to 11, and constituent (B) as defined in anyone of Claims 1 to 11, each to an extruder, and
- melt-extruding said constituents in parallel into said article in such a way that constituent (B) at least covers constituent (A).
